# EUROPÄISCHE PATENTSCHRIFT

(11) **EP 2 768 630 B1**
(45) Veröffentlichungstag und Bekanntmachung des Hinweises auf die Patenterteilung: **07.12.2016**
(21) Anmeldenummer: 11772965.7
(22) Anmeldetag: 19.10.2011
(51) Int. Cl.: B24D 18/00, B24B 53/00, B24B 53/06, B23K 26/08, B23K 26/40

(54) **VERFAHREN UND VORRICHTUNG ZUR BEARBEITUNG EINES ROTATIONSWERKZEUGS MIT EINER VIELZAHL VON SCHNEIDKÖRPERN**
METHOD AND DEVICE FOR MACHINING A ROTARY TOOL WITH A PLURALITY OF CUTTING BODIES
PROCÉDÉ ET DISPOSITIF D'USINAGE D'UN OUTIL ROTATIF PRÉSENTANT UNE PLURALITÉ DE CORPS DE COUPE

(43) Veröffentlichungstag der Anmeldung: 27.08.2014
(73) Patentinhaber: Walter Maschinenbau GmbH, 72072 Tübingen (DE)
(72) Erfinder: PLÜSS, Christoph, CH-3400 Burgdorf (CH); MUSHARDT, Heinrich, 21039 Börnsen (DE); WENKE, Oliver, 31535 Neustadt (DE)
(74) Vertreter: Rüger, Barthelt & Abel
(86) Internationale Anmeldenummer: PCT/EP2011/068281
(87) Internationale Veröffentlichungsnummer: WO 2013/056736

(56) Entgegenhaltungen:
- EP-A1- 0 716 899
- DE-A- 3 202 697
- JP-A- 2007 276 034
- US-A1- 2004 142 644

## Beschreibung

Die Erfindung betrifft ein Verfahren sowie eine Vorrichtung zur Bearbeitung eines Rotationswerkzeugs mit einer Vielzahl von Schneidkörpern. Das Rotationswerkzeug ist rotierend um eine Rotationsachse antreibbar und weist eine durch die Schneidkörper gebildeten geometrisch undefinierten Schneidenraum oder eine geometrisch definierte Werkzeugschneide auf. Bei dem Rotationswerkzeug mit Schneidkörpern, die einen geometrisch undefinierten Schneidenraum bilden, kann es sich beispielsweise um eine Schleifscheibe oder ein Abrichtwerkzeug handeln. Bei Werkzeugen, deren Schneidkörper eine geometrisch definierte Werkzeugschneide bilden, handelt es sich beispielsweise um ein Fräs-, Bohr- oder Reibwerkzeug.

Insbesondere bei Präzisionswerkzeugen ist es wichtig, dass ein sehr exaktes Profil und ein sehr exakter Rund- bzw. Planlauf des Rotationswerkzeugs erreicht wird. Da mit dem Werkzeug Bearbeitungsgenauigkeiten von einigen Mikrometern erreicht werden sollen, können Verschleißerscheinungen oder eine ungenaue Herstellung des Rotationswerkzeugs zu unzulässigen Toleranzabweichungen führen. Die exakte Herstellung oder Nachbearbeitung des Rotationswerkzeugs ist insbesondere dann schwierig, wenn die Schneidkörper aus sehr hartem Material bestehen oder eine sehr harte äußere Verschleißschutzschicht aufweisen, beispielsweise wenn Materialien wie kubisch kristallines Bornitrid, Diamant, polykristalliner Diamant (PKD) oder im CVD-Verfahren (Chemical-Vapour-Deposition-Verfahren) abgeschiedene Diamantschichten verwendet werden. Solche Schneidkörper sind teuer und die Nachbearbeitung ist zeit- und kostenaufwendig, so dass die Bearbeitung des Rotationswerkzeugs unter möglichst geringem Materialverbrauch der Schneidkörper erfolgen soll. Zum anderen müssen aber die Sollmaße des Rotationswerkzeugs erreicht werden.

In DE 32 02 697 C2 wird zur Bearbeitung eines Rotationswerkzeugs die Verwendung eines Elektronen- oder Laserstrahls vorgeschlagen, der tangential zur Außenfläche des Werkzeugs ausgerichtet ist. Kristallspitzen der Schneidkörper, die aus einem vorgegebenen Sollhüllraum, der die Außenkontur des Rotationswerkzeugs vorgibt, herausstehen, werden abgeschnitten. Hierfür wird das Rotationswerkzeug gedreht, während der Laserstrahl die Querschnittskontur abfährt, so dass das Rotationswerkzeug schließlich die gewünschte Kontur erhalten soll. Ein ähnliches Verfahren wird auch in US 2004/142644 A1 offenbart, das zusätzlich die Verwendung einer Kamera zur Überwachung der Bearbeitung vorsieht.

Aus EO 0 716 899 A1 ist ein Verfahren zur Oberflächenbearbeitung beispielsweise für Rotationswerkzeuge bekannt. Mittels eines Lasers wird die Dicke eines Abschnitts einer Diamantschicht gemessen und mit einem vorgegebenen Sollwert verglichen. Ein Ablationslaser kann erforderlichenfalls die Dicke an einer Stelle reduzieren, wenn der Sollwert überschritten wird.

JP 2C07 276034 A beschreibt das Abrichten eines mit abrasiven Diamantkörnern besetzten Zahnflanke. Ein scannender Laserstrahl wird entlang der Zahnflanke bewegt und erfasst die Spitzen der Diamantkörner, um diese abrichten zu können.

Es hat sich jedoch gezeigt, dass eine tangentiale Ausrichtung des Laserstrahls auf ein sich drehendes Rotationswerkzeug für dessen Bearbeitung ungeeignet ist, da der Laserstrahl nur an einem bestimmten Punkt fokussiert werden kann. Da auf diese Weise die gesamte Werkzeugkontur mit dem Laserstrahl abgefahren werden muss, ist das Verfahren außerdem äußerst zeitaufwendig. Ferner wird das Rotationswerkzeug ausschließlich hinsichtlich seiner Kontur bearbeitet. Zudem entstehen durch das Abschneiden der aus dem Sollhüllbereich herausstehenden Spitzen der Schneidkörper relativ große tangentiale Flächen, die die Schneidwirkung des Rotationswerkzeugs mindern.

Eine weitere bekannte Möglichkeit der Nachbearbeitung eines zum Schleifen verwendeten Rotationswerkzeugs ist das soganannte "Crushieren". Beim Crushieren wird die mit den Scheidkörpern versehene Arbeitsfläche flächig durch ein Werkzeug bearbeitet, um die Isthüllfläche an den Sollhüllraum anzupassen. Dabei werden im Bereich der bearbeiteten Fläche mit einem Crushierwerkzeug Schneidkörper aus dem Bindungsmaterial herausgebrochen. Dieses Verfahren ist aber auf die Genauigkeit des Crushierwerkzeugs begrenzt und eignet sich nicht für alle Formen der zu bearbeitenden Rotationswerkzeuge. Außerdem setzt das Crushieren ein poröses oder sprödes Bindungsmaterial voraus, da sich die Schneidkörper ansonsten nicht herausbrechen lassen. In vielen Fällen ist es nicht einsetzbar.

Auch bekannte abrasive Verfahren zum Schärfen oder Nachbearbeiten derartiger Rotationswerkzeuge haben den Nachteil, dass die scharfen Spitzen und Kanten der Schneidkörper abgetragen werden und mithin die Schneidwirkung des Rotationswerkzeugs negativ beeinflusst wird.

Ausgehend hiervon kann es als eine Aufgabe der vorliegeraden Erfindung angesehen werden, ein effizientes, materialsparendes Bearbeitungsverfahren, sowie eine Vorrichtung zur Durchführung des Verfahrens zu schaffen, das eine negative Beeinflussung der Schneid- bzw. Eingriffseigenschaften der wenigstens einen Werkzeugschneide beim Anpassen der Außenkontur an die Sollkontur vermeidet.

Diese Aufgabe wird durch ein Verfahren mit den Merkmalen des Patentanspruches 1 sowie eine Vorrichtung mit den Merkmalen des Patentanspruches 16 gelöst.

Im Unterschied zu den bisher verwendeten Verfahren soll die Bearbeitung des Ratationswerkzeugs an einzelnen, durch einen Messvorgang identifizierten Schneidkörper gezielt erfolgen und nicht an ganzen Flächenabschnitten des Rotationswerkzeugs, an dem zwar ein Teil aber eben nicht alle Schneidkörper eine Position oder eine Form außerhalb von vorgegebenen Toleranzen aufweist.

Erfindungsgemäß wird zunächst ein Sollhüllraum für das Rotationswerkzeug um die Rotationsachse des Rotationswerkzeugs vorgegeben. Dieser Sollhüllraum kann beispielsweise durch eine innere Sollhüllfläche und eine äußere Sollhüllfläche definiert sein und beschreibt den Bereich um die Werkzeugachse, in dem die aktiven bei der Bearbeitung eines Werkstücks mit dem Werkstück in Kontakt kommenden Schneiden der Schneidkörper liegen sollen. Der Sollhüllraum ist rotationssymmetrisch gegenüber der Rotationsachse des Rotationswerkzeugs. Diejenigen Schneidkörper, die durch den Sollhüllraum hindurch und aus diesem herausragen, stellen erste Schneidkörper dar, die zu bearbeiten oder zu entfernen sind.

Zusätzlich zum Sollhüllraum wird vorzugsweise wenigstens eine weitere die Schneideigenschaft des Rotationswerkzeugs bestimmende Sollgröße vorgegeben. Diese wenigstens eine weitere Sollgröße beschreibt eine Eigenschaft eines einzelnen Schneidkörpers und/oder einer Gruppe von Schneidkörpern, wobei die Gruppe von Schneidkörper auch alle Schneidkörper umfassen kann. Die wenigstens eine Sollgröße charakterisiert die Schneideigenschaft des Rotationswerkzeugs und charakterisiert beispielsweise
- die Form eines Schneidkörpers bzw. der Gruppe von Schneidkörpern, und/oder
- die Relativposition der Schneidkörper oder der Schneiden der Schneidkörper einer Gruppe von Schneidkörpern,
wobei die Sollgröße auch statistische Größe sein kann.

Während der Sollhüllraum eine makroskopische Eigenschaft des Rotationswerkzeugs angibt, definiert die wenigstens eine Sollgröße eine mikroskopische Eigenschaft der durch die Schneidkörper gebildeten Werkzeugschneide. Beispielsweise können als Sollgröße eine oder mehrere der folgenden Parameter verwendet werden:
(1) Die Größe einer Kontaktfläche eines Schneidkörpers, die bei der Verwendung des Rotationswerkzeug einem bearbeiteten Werkstück zugeordnet ist und insbesondere an diesem anliegt. Je kleiner die Kontaktfläche eines Schneidkörpers ist, desto schärfer ist dieser und desto besser greift der Schneidkörper in das Material des Werkstücks bei der Verwendung des Rotationswerkzeugs ein.
(2) Der Abstand zwischen zwei benachbarten, in den Sollhüllraum eingreifen Schneidkörpern oder deren Schneiden. Als Sollgröße kann sowohl ein Minimalabstand zwischen den benachbarten Schneidkörper oder Schneiden, als auch ein mittlerer Abstand einer Gruppe von Schneidkörpern oder Schneidkörper-Schneiden vorgegeben sein.
(3) Die Anzahl der in den Sollhüllraum eingreifenden Schneidkörper-Schneiden. Diese Anzahl kann auch auf einen vorgegebenen Flächeneinheit bezogen sein und mithin sozusagen die Dichte der Schneiden beschreiben, also beispielsweise die Anzahl der Schneiden pro Quadratmillimeter.
(4) Die Länge einer Schneide eines Scheidkörpers oder ein statistischer Längenwert der Schneiden bezogen auf eine Gruppe von Sichneidkörpern.
(5) Die Gesamtkontaktfläche einer Gruppe von Schneidkörpern, wobei die Gesamtkontaktfläche die Summe der Kontaktflächen der betrachteten Schneidkörper ist. Als Kontaktfläche wird die Fläche eines Schneidkörper verstanden, mit dem der Schneidkörper bei der Verwendung des Rotationswerkzeugs an einem bearbeiteten Werkstück zur Anlage kommen kann. Je größer die Gesamtkontaktfläche ist, desto weniger scharf ist das Rotationswerkzeug.
(6) Die Höhe eines Schneidkörpers oder ein statistischer Höhenwert einer Gruppe von Schneidkörpern. Die Höhe eines Schneidkörpers wird dabei ausgehend von dem Bindungsmaterial gemessen, das den Schneidkörper umgibt. Das Bindungsmaterial dient dazu, die Schneidkörper aneinander zu binden. Ausgehend vom Bindungsmaterial wird die Höhe bis zu der Stelle des Schneidkörper gemessen, die am weitesten von der Rotationsachse entfernt ist, also bis zur radial äußersten Stelle des Schneidkörpers.
(7) Ein geometrischer Parameter eines Schneidkörpers, der die Schneideigenschaften bestimmt, wie zum Beispiel der Winkel einer Scheidkante gegenüber einer Bezugsgeraden oder Bezugsfläche, der Radius einer Schneidkante, die Länge einer Schneidkante, etc.

Zu jeder vorgegebenen Sollgröße wird jeweils eine zugeordnete Istgröße eines Schneidkörpers und/oder einer Gruppe von Schneidkörper gemessen und/oder vermittelt. Hierzu dient eine insbesondere optische Messanordnung der Vorrichtung. Im Anschluss daran wird die Abweichung zwischen der vorgegebenen Sollgröße und der zugehörigen ermittelten Istgröße bestimmt.

Ist die Abweichung zwischen einer vorgegebenen Sollgröße und der zugeordneten Istgröße größer als eine vorgegebene Toleranz, so werden außerdem zweite Schneidkörper identifiziert und ausgewählt, die bearbeitet oder entfernt werden, um die Abweichung zu reduzieren. Anschließend werden in diesem Fall zusätzlich zu den ersten Schneidkörpern auch die zweiten Schneidkörper bearbeitet und/oder entfernt.

Mithin können einzelne erste und auch zweite Schneidkörper gezielt identifiziert und bearbeitet oder entfernt. Dadurch wird zum einen erreicht, dass die Isthüllfläche des Rotationswerkzeugs innerhalb des vorgegebenen Sollhüllraums liegt. Gleichzeitig besteht die Möglichkeit durch die Berücksichtigung der Sollgröße bei der Bearbeitung auch die Schneidwirkung des Rotationswerkzeugs positiv zu beeinflussen. Durch das gezielte Auswählen einzelner, erster und gegebenenfalls zweiter Schneidkörper, wobei nur diese ersten bzw. zweiten Schneidkörper bearbeitet oder entfernt werden, wird außerdem sichergestellt, dass das Rotationswerkzeug in relativ kurzer Zeit bearbeitet werden kann, um die gewünschte Form und die gewünschten Eigenschaften zu erreichen. Ferner wird nur wenig Material des Rotationswerkzeugs abgetragen. Die erfindungsgemäße Bearbeitung ist daher insgesamt äußerst wirtschaftlich.

Vorzugsweise erfolgt die Bearbeitung bzw. das Entfernen eines Schneidkörper mit Hilfe eines Laserstrahls. Der Laserstahl ist in einem spitzen Winkel von vorzugsweise kleiner als 45° und insbesondere kleiner als 30° zu einer Radialebene ausgerichtet, die durch die Rotationsachse des Rotationswerkzeugs und durch die Bearbeitungsstelle auf der Arbeitsfläche des Rotationswerkzeugs verläuft, auf die der Laserstrahl fokussiert ist. Durch eine solche Ausrichtung des Laserstrahls ist sichergestellt, dass bei der Bearbeitung keine großen Kontaktflächen an einem Schneidkörper entstehen, die das Rotationswerkzeug stumpf machen würden.

Das Bestimmen der Isthüllfläche des Werkzeugs und/oder der wenigstens einen Istgröße sowie das anschließende Bearbeiten und/oder Entfernen einzelner Schneidkörper erfolgt zyklisch, bis das Rotationswerkzeug die gewünschten Eigenschaften aufweist. Dieses zyklische Bearbeiten ist deswegen vorteilhaft, weil insbesondere bei der Verwendung eines Laserstrahls nicht exakt vorhergesagt werden kann, wie viel Material bei einem Laserstrahlimpuls vom Schneidkörper bzw. vom Bindungsmaterial entfernt wird. Deswegen ist es vorteilhaft, in einem zyklischen Prozess das Bearbeitungergebnis erneut zu prüfen und gegebenenfalls eine weitere gezielte Bearbeitung oder Entfernung einzelner zuvor ermittelter Schneidkörper durchzuführen.

Zur Messung der Isthüllfläche sowie der wenigstens einen Istgröße wird vorzugsweise eine berührungslose Messanordnung verwendet. Die berührungslose Messanordnung kann als optische Messanordnung ausgeführt sein. Bei einem bevorzugten Ausführungsbeispiel weist die berührungslose Messanordnung ein Auflichtmessgerät auf. Zusätzlich oder auch alternativ kann ein Durchlichtmessgerät mit einem Sender und einem dem Sender gegenüberliegenden Empfänger vorhanden sein, das insbesondere eine schnellen Isthüllflächenbestimmung ermöglicht. Insbesondere sind das Auflichtmessgerät und das Durchlichtmessgerät auf dieselbe Messstelle am Rotationswerkzeug gerichtet. Die Bearbeitungsstelle, auf die der Laserstrahl fokussiert ist, ist von der Messstelle bei einer vorteilhaften Ausführungsform beabstandet. Dadurch erfolgt sozusagen ein räumlich versetztes Messen und Bearbeiten.

In Abwandlung hierzu wäre es auch möglich, den Laserstrahl auf die Messstelle zu fokussieren, so dass die Messstelle und die Bearbeitungsstelle zusammenfallen. Bei dieser Anordnung wird zeitlich versetzt gearbeitet. Es wird zunächst gemessen, anschließend werden ein oder mehrere Laserstrahlimpulse erzeugt. Nach dem Ausschalten des Lasers wird dann wieder gemessen, usw.

Das Durchlichtmessgerät zur Erfassung der Isthüllfläche kann einen Laserscanner, eine Zeilenkamera oder eine Matrixkamera mit Durchlichtbeleuchtung oder andere geeignete optische Sensoren (z.B. ein sogenanntes "Position Sensitive Device") aufweisen.

Das Auflichtmessgerät kann eine Zeilenkamera oder eine Matrixkamera aufweisen und verwendet vorzugsweise diffuses und/oder im Wesentlichen monochromes Auflicht. Andere geeignete Sensoren und Verfahren, beispielsweise ein Streifenprojektionssensor oder auch ein Abstandssensor - wie z.B. Lasertriangulationssensor - können je nach Anforderung verwendet werden.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung sowie sonstiger Gegebenheiten. Die Zeichnung ist ergänzend heranzuziehen.

Es zeigen:
Figur 1 eine blockschaltbildähnliche Darstellung eines ersten Ausführungsbeispiels einer Vorrichtung zur Bearbeitung eines Rotationswerkzeugs,
Figur 2 eine blockschaltbildähnliche Darstellung eines zweiten Ausführungsbeispiels einer Vorrichtung zur Bearbeitung eines Rotationswerkzeugs,
Figur 3 ein Flussdiagramm eines Ausführungsbeispiels eines erfindungsgemäßen Verfahrens zur Bearbeitung eines Rotationswerkzeugs,
Figur 4 eine schematische Darstellung einer Isthüllfläche und eines Sollhüllraums für eine Querschnittsebene eines Rotationswerkzeugs,
Figur 5 eine beispielhafte schematische Detaildarstellung des Randbereichs eines Rotationswerkzeugs im Radialschnitt,
Figur 5a eine weitere beispielhafte schematische Detaildarstellung eines Randbereichs eines Rotationswerkzeugs mit wellenförmiger Arbeitsfläche im Radialschnitt,
Figur 5b einen Radialschnitt durch das Rotationswerkzeug nach Figur 1 gemäß Schnittebene C1,
Figur 5c einen Radialschnitt durch das Rotationswerkzeug nach Figur 1 gemäß Schnittebene C2,
Figuren 6a - 6c den Zusammenhang zwischen der Anzahl der Schneidkörper-Schneiden sowie einer Gesamtkontaktfläche des Rotationswerkzeugs abhängig von einer Tiefe,
Figur 7a eine schematische Draufsicht auf einen Ausschnitt der Arbeitsfläche des Rotationswerkzeugs mit einer Mehrzahl von Schneidkörpern vor der Bearbeitung,
Figur 7b die schematische Darstellung gemäß Figur 7a nach der Bearbeitung, wobei die bearbeiteten Schneidkörper durch Pfeile markiert sind,
Figur 8 eine vergrößerte schematische und lediglich beispielhafte Veranschaulichung der Bearbeitung eines Schneidkörpers mit Hilfe eines Laserstrahls,
Figur 9a eine schematische Draufsicht auf einen Ausschnitt der Arbeitsfläche des Rotationswerkzeugs mit einer Mehrzahl von Schneidkörper in unregelmäßiger Verteilung vor der Bearbeitung,
Figur 9b die schematische Darstellung gemäß Figur 9a, wobei ein Teil der Schneidkörper entfernt und ein anderer Teil des Schneidkörpers bearbeitet wurde und die bearbeiteten Schneidkörper durch Pfeile markiert sind,
Figur 10 eine alternative Anordnungsmöglichkeit der Schneidkörper des Rotationswerkzeugs nach einem vorbestimmten Muster,
Figur 11 eine schematische, teilgeschnittene Detaildarstellung eines Außenbereichs des Rotationswerkzeugs, wobei Vertiefungen zwischen die Schneidkörper zur Verbesserung des Kühlmittelabflusses eingebracht sind.
Figur 12 eine schematische, teilgeschnittene Detaildarstellung eines Abschnitts des Rotationswerkzeugs mit einer alternativen Ausgestaltung der Schneidkörper und beispielhaft angegebenen geometrischen Parametern,
Figur 13 eine Draufsicht gemäß Pfeil XIII in Figur 12 radial zur Rotationsachse des Rotationswerkzeugs beim Ausführungsbeispiel aus Figur 12 mit weiteren beispielhaft angegebenen geometrischen Parametern und
Figur 14 eine schematische Darstellung des Abschnitts des Rotationswerkzeugs aus Figuren 12 und 13 in einem Radialschnitt nach Schnittlinie XIV-XIV in Figur 13.

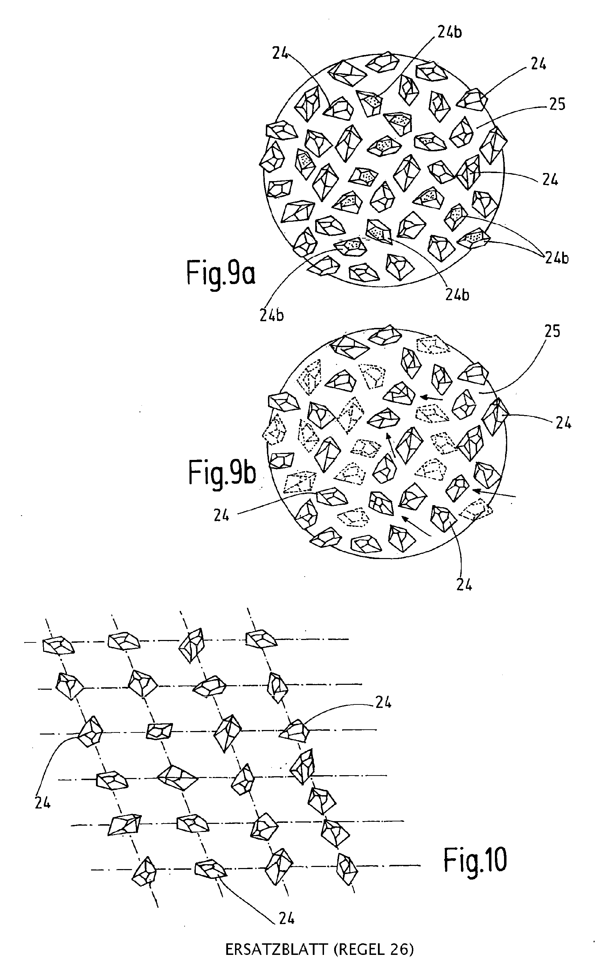

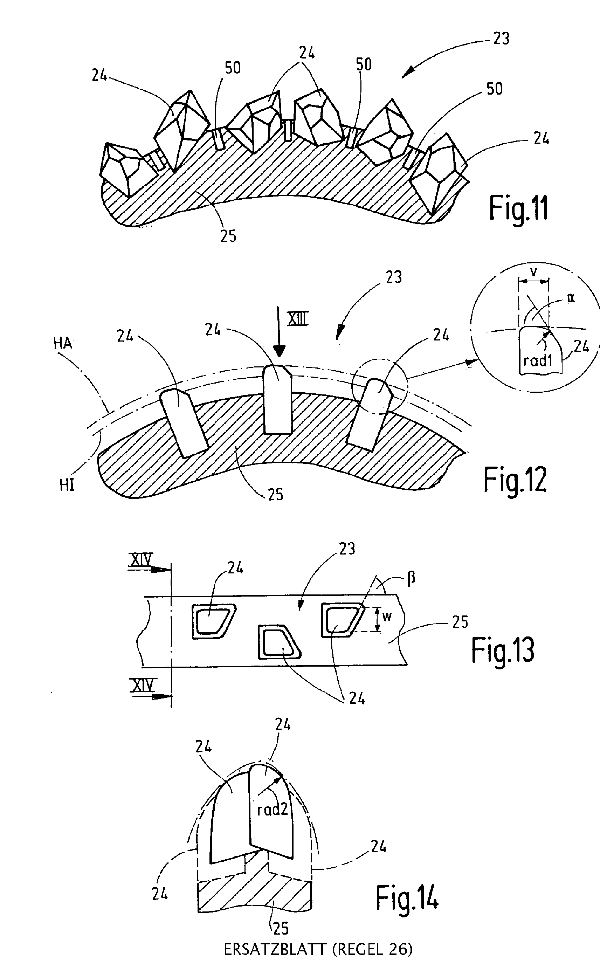

Die Erfindung betrifft eine Vorrichtung 20 zur Bearbeitung eines Rotationswerkzeugs 21 sowie ein Verfahren 22, zu dessen Bearbeitung. Bei dem Rotationswerkzeug 21 handelt es sich um ein Werkzeug zur spanenden Bearbeitung. Das Rotationswerkzeug 21 ist um eine Rotationsachse R rotierend antreibbar. Das Rotationswerkzeug 21 weist an seinem Umfang eine Arbeitsfläche 23 auf, an der wenigstens eine Werkzeugschneide vorgesehen ist, die um die Rotationsachse R rotierend antreibbar ist. Eine Vielzahl von Schneidkörpern 24 mit jeweils einer oder mehreren Schneidköperschneiden 43 bildet beispielsgemäß einen geometrisch undefinierten Schneidenraum. Die Schneidkörper 24 können statistisch verteilt im Bereich der Arbeitsfläche 23 des Rotationswerkzeugs 21 angeordnet sein. Alternativ hierzu ist es auch möglich, die Schneidkörper 24 auf genau vorgegebene Positionen zu setzen, wie dies in Figur 10 oder in den Figuren 12 bis 14 veranschaulicht ist. Die Eingriffsprofile der Schneidkörper 24 überlappen oder überschneiden sich bei der Rotation des Rotationswerkzeugs 21 und definieren so das Werkzeugprofil. Für das Ausführungsbeispiel der definiert gesetzten Schneidkörper 24 ist dies in Figur 14 veranschaulicht. Vorzugsweise sind die Schneidkörper 24 durch Schneidkristalle gebildet, so dass sich die Schneidkörper 24 voneinander unterscheiden. Es ist allerdings auch möglich, jedem Schneidköroper 24 eine gewünschte Form zu geben, wie dies in den Figuren 12 und 13 beispielhaft gezeigt ist.

Alternativ zu dem hier beschriebenen bevorzugten Ausführungsbeispiel können die Schneidkörper 24 auch eine oder mehrere geometrisch definierte Schneiden am Rotationswerkzeug 21 bilden.

Die Schneidkörper bestehen aus einem harten und widerstandsfähigen Material oder weisen zumindest eine Verschleißschutzschicht aus diesem harten Material auf. Als Material kann bspw. kristallines Bornitrid, Diamant oder polykristalliner Diamant (PKD) verwendet werden. Die Verschleißschutzschicht kann beispielsweise über ein CVD-Verfahren (Chemical-Vapour-Deposition-Verfahren) aufgebracht werden und aus Diamant bestehen.

Die Schneidkörper 24 werden durch ein Träger- oder Bindungsmaterial 25 am Rotationswerkzeug 21 gehalten. Beispielsweise kann das Bindungsmaterial durch ein Kunstharz gebildet sein. Es ist auch möglich, die Schneidkörper 24 und das Bindungsmaterial 25 durch Sintern miteinander zu verbinden, wobei bspw. Metallstaub als Bindungsmaterial 25 verwendet wird. Außerdem können die Schneidkörper 24 galvanisch z.B. über eine Nickelverbindung als Bindungsmaterial 25 miteinander verbunden werden.

Bei dem Rotationswerkzeug 21 handelt es sich vorzugsweise um ein Schleifwerkzeug oder ein Abrichtwerkzeug. Bei diesen Werkzeugtypen ist eine besonders hohe Formgenauigkeit erforderlich, um später bei der Verwendung des Rotationswerkzeugs 21 die gewünschte Bearbeitungsgenauigkeit an einem Werkstück zu erhalten. Abweichungen im Rundlauf bzw. im Planlauf des Rotationswerkzeugs 21 dürfen daher nur in sehr engen Toleranzgrenzen zugelassen werden. Das erfindungsgemäße Bearbeitungsverfahren bzw. die erfindungsgemäße Vorrichtung 20 können dazu verwendet werden, die gewünschte Genauigkeit des Rotationswerkzeugs 21 herzustellen. Außerdem kann die Erfindung dazu verwendet werden, das Rotationswerkzeug 21 nachzubearbeiten bspw. um Verschleiß zu beheben und eine geforderte Schärfe oder Schneidcharakteristik wiederherzustellen. Mithilfe der Erfindung kann die Bearbeitung des Rotationswerkzeugs 21 Material sparend und effizient und mithin sehr wirtschaftlich erfolgen.

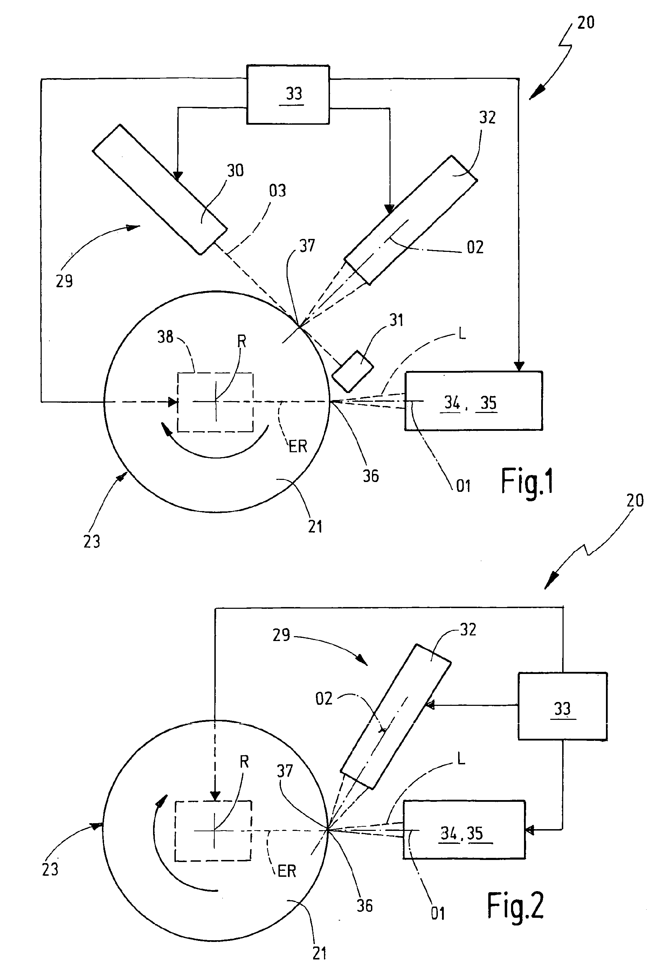

Die Vorrichtung 20 weist eine Messanordnung 29 auf, die beim ersten Ausführungsbeispiel gemäß Figur 1 ein Durchlichtmessgerät 30 mit Durchlichtkamera 31 sowie ein Auflichtmessgerät 32 umfasst. Die Messanordnung 29 bzw. die Messgeräte 30, 32 werden von einer Steuereinrichtung 33 gesteuert. Die Messanordnung 29 dient dazu, das Rotationswerkzeug 21 zu vermessen.

Zu der Vorrichtung 20 gehört außerdem eine Bearbeitungseinrichtung 34, die beim Ausführungsbeispiel durch eine Lasereinrichtung 35 gebildet ist. Die Bearbeitungseinrichtung 34 und beispielsgemäß die Lasereinrichtung 35 dient dazu, das Rotationswerkzeug 21 an durch die Messanordnung 28 genau definierten Stellen der Arbeitsfläche 23 zu bearbeiten, um festgestellte Abweichungen zwischen der gewünschten Form und/oder Charakteristik der Arbeitsfläche 23 bzw. der Schneidkörper 24 zu eliminieren. Die Lasereinrichtung 35 erzeugt hierfür einen vorzugsweise gepulsten Laserstrahl L, der auf eine Bearbeitungsstelle 36 fokussiert ist. An dieser Bearbeitungsstelle 36 werden gezielt einzelne vorher identifizierte Schneidkörper 24 bearbeitet oder entfernt. Außerdem kann das Bindungsmaterial 25 zwischen den Schneidkörpern 24 bearbeitet werden.

Die Bearbeitungsstelle 36 der Lasereinrichtung 35 liegt auf einer optischen Achse O1 der Lasereinrichtung 35. Diese optische Achse O1 der Lasereinrichtung 35 schließt mit einer Radialebene ER, die durch die Rotationsachse R des Rotationswerkzeugs 21 und durch die Bearbeitungsstelle 36 verläuft, einen spitzen Winkel ein, der insbesondere kleiner als 45° und beim Ausführungsbeispiel kleiner als 30° ist Dieser Winkel kann konstant sein oder sich während der Bearbeitung ändern. Gemäß der Figuren 1 und 2 ist die optische Achse O1 der Lasereinrichtung 35 radial zur Rotationsachse R ausgerichtet und liegt daher innerhalb der Radialebene ER.

Beim ersten Ausführungsbeispiel befindet sich die Bearbeitungsstelle 36 versetzt zu einer Messstelle 37, an der die Messung durch die Messanordnung 29 an der Arbeitsfläche 23 des Rotationswerkzeugs 21 stattfindet. Sowohl das Durchlichtmessgerät 30, als auch das Auflichtmessgerät 32 sind auf dieselbe Messstelle 37 an der Arbeitsfläche 23 ausgerichtet, wobei in Abwandlung hierzu die Messgeräte 30, 32 auch voneinander entfernte Messstellen aufweisen könnten. Beim ersten Ausführungsbeispiel gemäß Figur 1 ist die optische Achse 02 des Auflichtmessgeräts 32 radial zur Rotationsachse R des Rotationswerkzeugs 21 orientiert. Die optische Achse 03 des Durchlichtmessgeräts 30 ist im Wesentlichen rechtwinklig zur optischen Achse 02 des Auflichtmessgeräts 32 ausgerichtet, so dass die optische Achse 03 des Durchlichtmessgerätes 30 in etwa tangential zur Arbeitsfläche 23 verläuft. Entlang der optischen Achse 03 des Durchlichtmessgerätes 30 ist auf der einen Seite die Durchlichtkamera 31 und auf der entgegen gesetzten Seite eine Lichtquelle angeordnet.

Die Vorrichtung 20 weist außerdem eine Antriebseinrichtung 38 auf, die durch die Steuereinheit 33 gesteuert wird. Die Antriebseinrichtung 38 dient dazu, das Rotationswerkzeug 21 während der Bearbeitung um die Rotationsachse R zu drehen und/oder entlang der Rotationsachse linear zu verschieben. Über die Messanordnung 29 kann beispielsgemäß parallel zur Rotationsachse R gesehen nur ein bestimmter Messabschnitt erfasst werden, der im Bereich von einigen Millimetern liegen kann. Beispielsweise kann eine Matrixkamera als Durchlichtkamera 31 einen Bereich von etwa 3 mm bis 6 mm erfassen, was jedoch auch von der Auflösung der Durchlichtkamera 31 abhängt. Ist die Arbeitsfläche 23 in ihrer Erstreckungsrichtung parallel zur Rotationsachse R größer als der Erfassungsbereich der Messanordnung 29, so werden axial parallel zur Rotationsachse R versetzt mehrere Messungen durchgeführt, die anschließend in der Messanordnung 29 und/oder in der Steuereinrichtung 33 miteinander verbunden bzw. ausgewertet werden können.

Wie in den Figuren 1 und 2 veranschaulicht, dient die Steuereinrichtung 33 auch zur Ansteuerung der Bearbeitungseinrichtung 24 und beispielsgemäß der Lasereinrichtung 35. Durch die Messung mithilfe der Messanordnung 29 werden diejenigen Schneidkörper 24 identifiziert, die bearbeitet bzw. entfernt werden sollen. Die Steuereinrichtung 33 steuert die Antriebseinrichtung 38 und die Bearbeitungseinrichtung 34 bzw. die Lasereinrichtung 35 an, um die zur Bearbeitung bzw. zur Entfernung identifizierten Schneidkörper 24 dementsprechend zu bearbeiten bzw. zu entfernen. Die Lasereinrichtung 35 erzeugt vorzugsweise einen gepulsten Laserstrahl L. sie kann optische Mittel zur Fokussierung und/oder Ausrichtung des Laserstrahls L aufweisen, so dass die optische Achse O1 der Lasereinrichtung 35 und dadurch auch die Bearbeitungsstelle 36 durch optische Mittel der Lasereinrichtung 35 bewegt werden kann.

Im Unterschied zum ersten Ausführungsbeispiel nach Figur 1 ist beim zweiten Ausführungsbeispiel gemäß Figur 2 kein Durchlichtmessgerät 30 vorgesehen. Die Messanordnung 29 weist lediglich ein Auflichtmessgerät 32 auf. Dessen optische Achse 02 schneidet die Rotationsachse R nicht. Die optische Achse 02 des Auflichtmessgerätes 32 ist schräg zu einer Tangente an die Messstelle 36 und schräg zu einer Radialebene durch die Messstelle 37 und die Rotationsachse R ausgerichtet. Durch diese Ausrichtung kann mithilfe des Auflichtmessgerätes 32 sowohl die durch die an der Arbeitsfläche 23 angeordneten Schneidkörper 24 definierte Isthüllfläche HF des Rotationswerkzeugs 21, sowie geometrische Eigenschaften eines Schneidkörpers 24 bzw. geometrische Eigenschaften einer Gruppe von Schneidkörpern 24 bestimmt werden. Beim ersten Ausführungsbeispiel gemäß Figur 1 ist das Durchlichtmessgerät 30 dafür vorgesehen, die Isthüllfläche HF des Rotationswerkzeugs 21 zu erfassen, während die Bestimmung von geometrischen Eigenschaften eines einzelnen Schneidkörpers 24 oder einer Gruppe von Schneidkörpern 24 durch das Auflichtmessgerät 32 erfolgt.

Bei dem in Figur 2 dargestellten Ausführungsbeispiel entspricht die Messstelle 37 der Bearbeitungsstelle 36. Bei dieser Ausführung kann nicht gleichzeitig gemessen und bearbeitet werden, da durch den auftreffenden Laserstrahl L eine hohe Lichtintensität und eine Plasmawolke entstehen, die die optische Messung der Messanordnung 29 stören. Es wird daher zeitlich nacheinander gemessen und durch den Laserstrahl L Material bearbeitet. Da bei der ersten Ausführungsform nach Figur 1 die Messstelle 37 beabstandet ist von der Bearbeitungsstelle 36 kann gleichzeitig an der Messstelle 37 gemessen und an der Bearbeitungsstelle 36 eine Bearbeitung des Rotationswerkzeugs 21 vorgenommen werden.

Es versteht sich, dass auch Kombinationen der beiden in den Figuren 1 und 2 dargestellten Ausführungsformen möglich sind. So könnte auch beim ersten Ausführungsbeispiel die optische Achse 02 des Auflichtmessgeräts 32 schräg zu der Radialebene durch die Messstelle 37 und der Rotationsachse R ausgerichtet sein. Außerdem könnte auch beim ersten Ausführungsbeispiel die Bearbeitungsstelle 36 und die Messstelle 37 zusammenfallen.

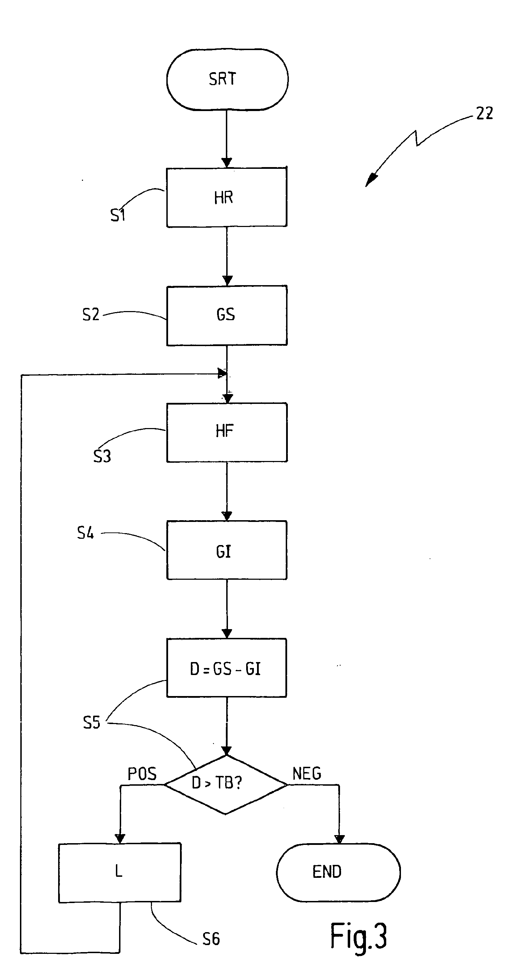

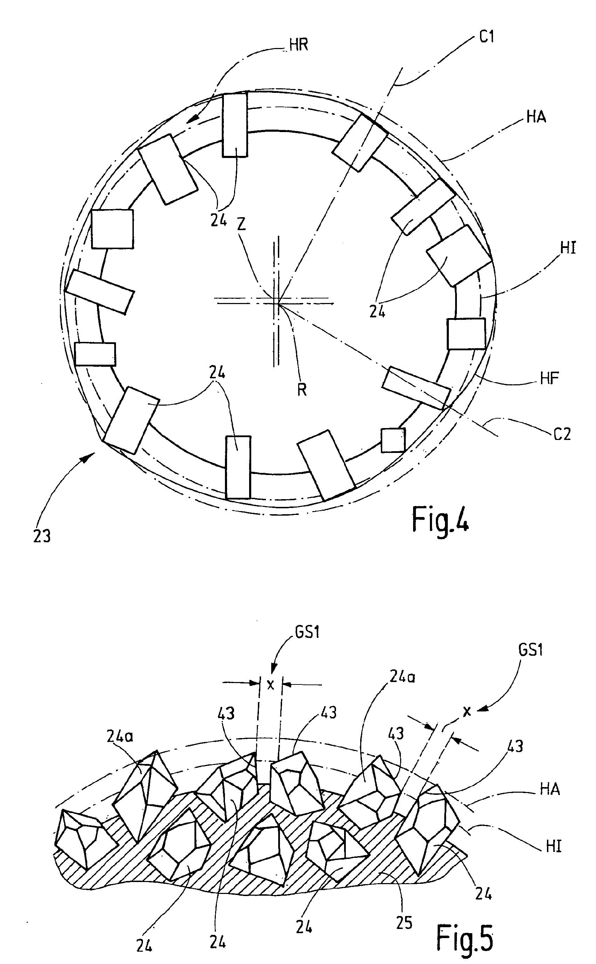

In Figur 3 ist ein beispielhafter Verfahrensablauf anhand eines Flussdiagramms veranschaulicht. Das Verfahren 22 wird anhand des Flussdiagramms sowie den weiteren Figuren 4 bis 13 im Folgenden näher erläutert.

Nach dem Start SRT des Verfahrens 22 wird in einem ersten Verfahrensschritt S1 der Sollhüllraum HR vorgegeben. Der Sollhüllraum HR ist ein rotationssymmetrischen Raum oder Bereich um die Rotationsachse R des Rotationswerkzeugs 21. Beispielsgemäß ist der Sollhüllraum HR durch eine rotationssymmetrische innere Hüllfläche HI und eine rotationssymmetrische äußere Hüllfläche HA definiert, wie dies in Figur 4 schematisch veranschaulicht ist. Verläuft die Hüllfläche HF an jeder Stelle innerhalb des Sollhüllraums HR, so entspricht die äußere Form bzw. die Kontur des Rotationswerkzeugs 21 bzw. der Arbeitsfläche 23 der Vorgabe. Bei dem in Figur 4 veranschaulichten Beispiel ist zu erkennen, dass die Isthüllfläche HF an mehreren Stellen außerhalb des Sollhüllraumes HR verläuft. Dadurch stimmt das geometrische Zentrum Z des Rotationswerkzeugs 21 auch nicht mit der Rotationsachse R überein, wodurch es zu Rundlaufabweichungen kommt. Diese Abweichungen werden nachfolgend durch das erfindungsgemäße Verfahren 22 mithilfe der Vorrichtung 20 beseitigt.

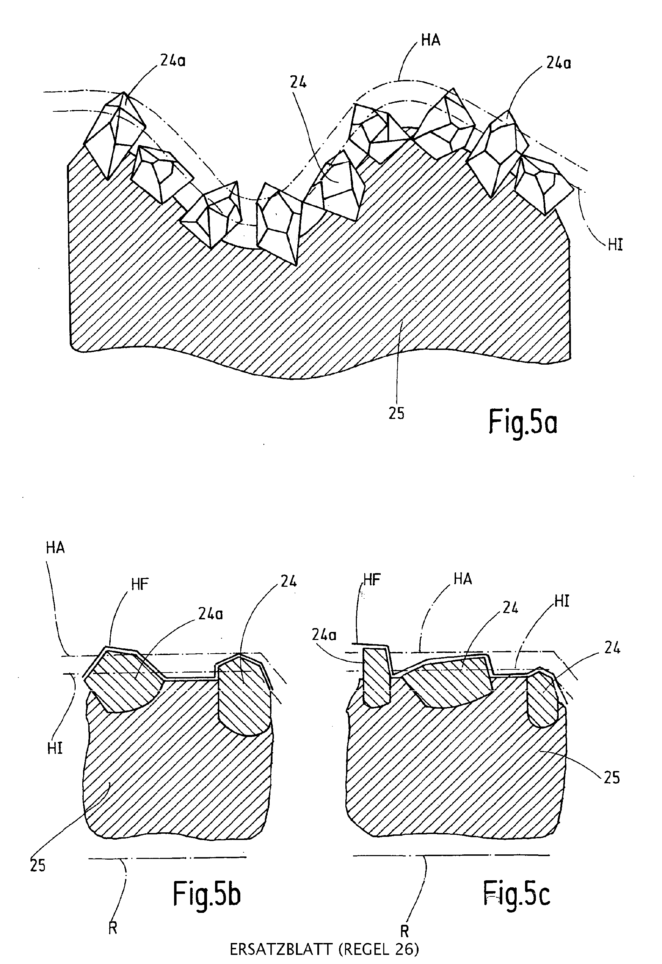

Wie in den Figuren 5, 5a, 5b und 5c veranschaulicht, kann die Arbeitsfläche 23 des Rotationswerkzeugs 21 im Radialschnitt betrachtet verschiedene Formen bzw. Konturen aufweisen. Parallel zur Rotationsachse R gesehen kann der Hüllraum HR zum Beispiel gekrümmt verlaufen (Figur 5), einen wellenförmigen Verlauf aufweisen (Figur 5a) oder auch einen Verlauf mit Knicken und/oder Stufen (Figur 5b, 5c). Dies hängt vom Typ des Rotationswerkzeuges und von dessen Einsatzzweck ab. Abweichungen der Isthüllfläche HF vom Sollhüllraum HR können in Umfangsrichtung bzw. in Rotationsrichtung des Rotationswerkzeugs 21 und/oder in Richtung parallel zur Rotationsachse R auftreten.

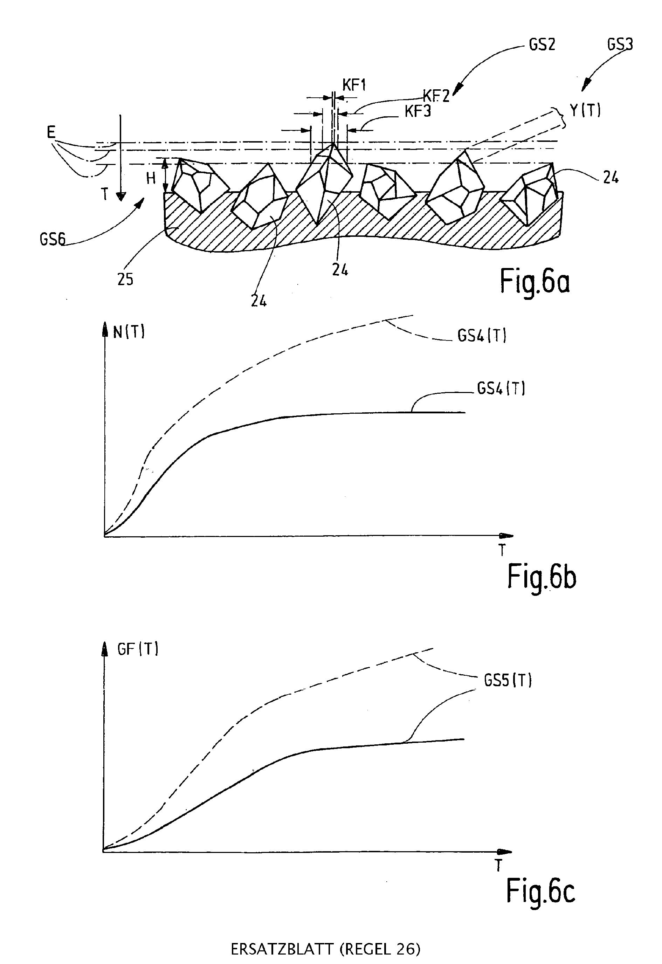

Neben dem Sollhüllraum HR wird beispielsgemäß in einem zweiten Verfahren Schritt S2 wenigstens eine weitere Sollgröße GS vorgegeben. Während der Sollhüllraum HR die makroskopische Form des Rotationswerkzeugs 21 bzw. der Arbeitsfläche 23 vorgibt, charakterisiert die wenigstens eine zusätzliche Sollgröße GS die mikroskopische Gestalt der Arbeitsfläche 23. Insbesondere wird durch die wenigstens eine Sollgröße GS die Schneidcharakteristik der von den verteilt entlang der Arbeitsfläche angeordneten Schneidkörpern 24 beschrieben. Beim bevorzugten Ausführungsbeispiel wird als wenigstens eine Sollgröße GS eine oder mehrere der nachfolgenden Größen verwendet:
a) Als eine erste Sollgröße GS1 kann der Minimalabstand x zweier Schneidkörperschneiden 43 benachbarter Schneidkörper 24 verwendet werden, wobei beispielsweise nur solche Schneidkörperschneiden 43 betrachtet werden, die vollständig oder teilweise innerhalb des Sollhüllraums HR verlaufen. Der Minimalabstand x kann also der Abstand sein, an dem die beiden Schneidkörperschneiden 43 innerhalb des Sollhüllraums HR den geringsten Abstand zueinander aufweisen. Als erster Sollwert GS1 kann für den Minimalabstand x ein Grenzwert vorgegeben sein, der nicht unterschritten werden darf (Figur 5). Denn wird der Minimalabstand x zwischen zwei benachbarten Schneidkörperschneiden 43 zu gering, können die einzelnen Schneidkörperschneiden 43 beim Eingriff in ein zu bearbeitendes Werkstück nicht ausreichend gut eindringen, da die Materialverdrängung und die Spanabfuhr behindert ist.
b) Als eine zweite Sollgröße GS2 kann die Größe der Kontaktfläche KF eines Schneidkörpers 24 dienen. Die Kontaktfläche KF ist diejenige auf einer Einhüllenden E um die Rotationsachse R liegende Querschnittfläche eines Schneidkörpers 24, die abhängig vom Verschleiß eines Schneidkörpers 24 bei der Bearbeitung eins Werkstücks in Kontakt bzw. zur Anlage mit dem Werkstück gelangen kann. Allgemein wird die Kontaktfläche KF unabhängig vom aktuellen Verschleißzustand auf der Einhüllenden E gemessen und auf diese bezogen werden. Die Einhüllende E ist eine rotationssymmetrische Fläche um die Rotationsachse R und entspricht in ihrer Form der inneren und der äußeren Hüllfläche HI, HA, wobei der Abstand zur Rotationsachse R variieren kann. Die Einhüllende kann innerhalb oder außerhalb des Sollhüllraums verlaufen. Ihr Abstand von der Rotationsachse wird beispielsgemäß durch eine Tiefe T beschrieben. Je kleiner der Abstand einer Einhüllenden E zur Rotationsachse R ist, desto größer ist eine Tiefe T (Figur 6a). Die Kontaktfläche KF ist daher als Funktion von der Tiefe T definiert. Da sich der Querschnitt der Schneidkörper 24 von einer radial nach außen weisenden Schneidkörperschneide oder Spitze vergrößert, nimmt die Kontaktfläche KF mit zunehmender Tiefe T ebenfalls zu. Je größer die Kontaktfläche KF ist, desto weniger scharf ist ein Schneidkörper 24. Die Zunahme der Kontaktfläche KF mit zunehmender Tiefe T ist schematisch in Figur 6a für einen der Schneidkörper veranschaulicht, wobei die Kontaktfläche KF von einem ersten Flächenwert KF1 über einen zweiten Flächenwert KF2 zu einem dritten Flächenwert KF3 zunimmt. Als zweite Sollgröße GS2 kann für eine oder mehrere Tiefen T ein Wert oder ein Wertebereich für die Kontaktflächengöße vorgegeben werden. Auch ist es möglich, als zweiten Sollwert GS2, eine Funktion der Größe der Kontaktfläche KF eines Schneidkörpers 24 abhängig von der Tiefe T vorzugeben.
c) Als eine dritte Sollgröße GS3 kann für einen oder mehrere Tiefenwerte oder als Funktion der Tiefe T die Länge y einer Schneidkörscheide 43 eines Schneidkörpers 24 vorgegeben sein (Figur 6a), wobei vorzugsweise nur der Abschnitt einer Schneidkörscheide 43 berücksichtigt wird, der innerhalb des Sollhüllraums HR liegt.
d) Als eine vierte Sollgröße GS4 kann die Anzahl N der Schneidkörperschneiden 43 für mehrere vorgegebene Tiefenwerte T oder als Funktion der Tiefe T vorgegeben werden, wie dies schematisch in Figur 6b dargestellt ist. Die vierte Sollgröße GS4 kann beispielsweise einen unteren Grenzwert (durchgezogene Linie in Figur 6b) und/oder einen oberen Grenzwert (gestrichelte Linie in Figur 6b) aufweisen.
e) Als fünfte Sollgröße GS5 kann die Größe einer Gesamtkontaktfläche GF einer Gruppe mit mehreren Schneidkörpern 24 bzw. aller Schneidkörper 24 für einen oder mehrere Tiefenwerte T oder als Funktion abhängig von der Tiefe T vorgegeben werden. Die Gesamtkontaktfläche GF ist dabei die Summe der Beträge jeder Kontaktfläche KF, auf der in der vorgegebenen Tiefe T verlaufenden Einhüllenden E. Bei der Gesamtkontaktfläche GF werden somit nicht einzelne Schneidkörper 24 betrachtet, sondern die Gesamtkontaktfläche GF ist allen Schneidkörpern 24 der betrachteten Gruppe von Schneidkörpern 24 bzw. allen Schneidkörpern 24 an der Arbeitsfläche 23 zugeordnet. Die fünfte Sollgröße GS5 kann einen unteren Grenzwert (durchgezogene Linie in Figur 6c) und/oder einen oberen Grenzwert (gestrichelte Linie in Figur 6c) aufweisen.
f) Als sechste Sollgröße GS6 kann die Höhe H eines Schneidkörpers 24 verwendet werden. Die Höhe H kann bspw. ausgehend von dem den Schneidkörper 24 umgebenden Bindungsmaterial 25 bis zu der Stelle des Schneidkörpers 24 gemessen werden, die am weitesten von der Rotationsachse R entfernt ist (Figur 6a). Die Höhe H beschreibt die maximale Eingriffstiefe eines Schneidkörpers 24 in die Oberfläche eines Werkstücks bei der Verwendung des Rotationswerkzeugs 21. Für die Höhe H kann als sechste Sollgröße GS6 z.B. ein Minimalwert und/oder auch ein Maximalwert vorgegeben sein.
g) Als Sollgröße kann auch wenigstens ein geometrische Parameter eines Schneidkörpers 24 verwendet werden, wie dies anhand der Figuren 12 bis 14 beispielhaft veranschaulicht ist:
   ein Winkel α, β einer Schneidkörperscheide 43 relativ zu einer Bezugslinie oder eine Bezugsfläche; ein Radius rad1 oder rad2 einer Schneidkörperscheide 43;
   die Breite w oder die Länge v einer Schneidkörperscheide 43 und/oder einer Fläche eines Schneikörpers 24.

In einem dritten Verfahrensschritt S3 wird mithilfe der optischen Messanordnung 29 und bspw. mithilfe des Durchlichtmessgeräts 30 die Isthüllfläche HF ermittelt. Hierfür wird das Rotationswerkzeug 21 über die Antriebseinrichtung 38 um die Rotationsachse R und gegebenenfalls sukzessive auch parallel zur Rotationsachse R bewegt bis die gesamte Arbeitsfläche 23 erfasst wurde. In der Messanordnung 29 bzw. in der Steuereinrichtung 33 kann anschließend aus den einzelnen Messungen an der Messstelle 37 die Isthüllfläche HF gebildet werden, die durch die Position und Lage aller Schneidkörper 24 bestimmt ist.

In einem vierten Verfahrensschritt S4 wird dann durch die optische Messanordnung 29 die Form bzw. die Gestalt einzelner Schneidkörper 24 erfasst, wofür beispielsgemäß das Auflichtmessgerät 32 verwendet wird. Dabei werden einer oder mehrere Istgrößen GI bestimmt. Als Istgrößen IG werden die Istwerte aufgenommen, für die eine Sollgröße GS vorgegeben ist. Die Erfassung der Isthüllfläche HF sowie der wenigstens einen Istgröße GI kann zeitlich nacheinander erfolgen. Alternativ hierzu ist es auch möglich, bereits während der Erfassung der Isthüllfläche HF auch die wenigstens eine Istgröße GI zu bestimmen.

Im Anschluss an die Bestimmung der Isthüllfläche HF sowie der wenigstens einen Istgröße GI werden in einem fünften Verfahrensschritt S5 diejenigen Schneidkörper 24 identifiziert, die bearbeitet oder entfernt werden sollen.

Als erste Schneidkörper 24a werden diejenigen Schneidkörper 24 identifiziert, die aus der äußeren Sollhüllfläche HF herausragen (Figur 5).

Als zweite Schneidkörper 24b werden diejenigen Schneidkörper 24 identifiziert, die bearbeitet oder entfernt werden müssen, um eine Abweichung D zwischen einer vorgegeben Sollgröße GS und der dazugehörigen Istgröße GI zu reduzieren, wenn festgestellt wird, dass die Abweichung D größer ist als ein zulässiger der betreffenden Sollgröße GS zugeordneter Toleranzbereich TB.

Es versteht sich, dass die Abweichung D zwischen einer Sollgröße GS und einer zugehörigen Istgröße GI auch dadurch beeinflusst werden kann, dass die ersten Schneidkörper 24a bearbeitet und/oder entfernt werden. Dies wird bei der Festlegung von weiteren, zweiten Schneidkörpern 24b berücksichtigt.

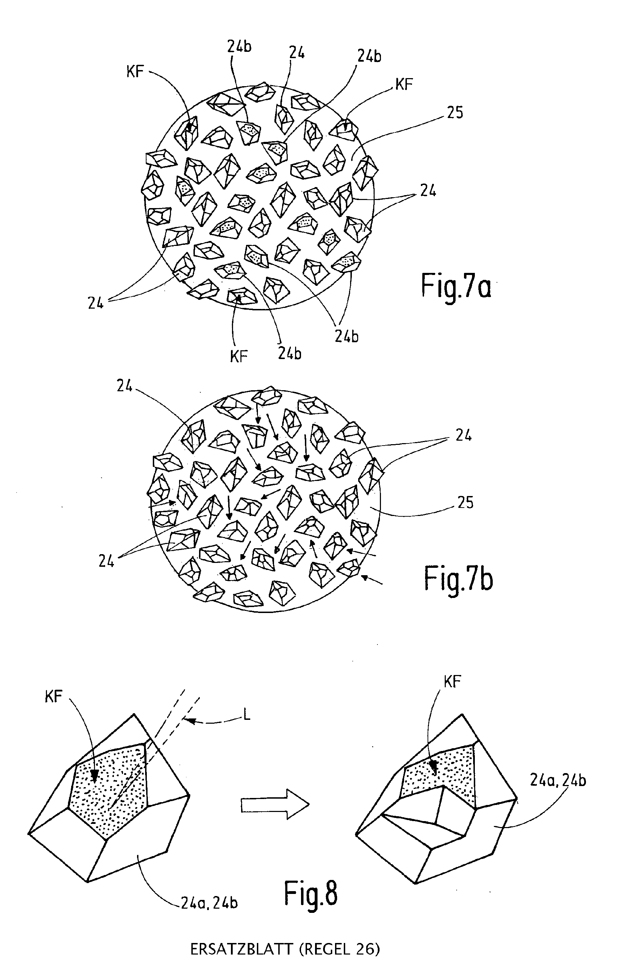

In den Figuren 7a und 9a sind sehr schematisch und beispielhaft diejenigen zweiten Schneidkörper 24b dargestellt, die bearbeitet oder entfernt werden müssen, um eine Abweichung zu verringern, beispielsweise um die Gesamtkontaktfläche GF zu reduzieren. Es wurde daher eine bestimmte Anzahl von Schneidkörpern 24 als zweite Schneidkörper 24b identifiziert, die eine relativ große Kontaktfläche KF aufweisen, die in den Figuren 7a und 9a gepunktet dargestellt ist. Beispielsweise können in diesem Fall solche Schneidkörper 24 als zweite Schneidkörper 24b ausgewählt werden, deren Kontaktflächen KF größer sind als ein vorgegebener Vergleichwert.

In Figur 7b sind die zur Reduzierung der Gesamtkontaktfläche GF bearbeiteten zweiten Schneidkörper 24b mit Pfeilen markiert. In Figur 8 ist schematisch vergrößert das Bearbeiten eines ersten oder zweiten Schneidkörpers 24b veranschaulicht. Durch Richten eines Impulses des Laserstrahls L auf eine definierte Stelle des Schneidkörpers wird ein Teil des Schneidkörpers entfernt und beispielsgemäß verdampft. Auf diese Weise können aus dem Sollhüllraum HR herausragende Teile entfernt oder die Größe seiner Kontaktfläche KF reduziert werden.

Es ist auch möglich, Schneidkörper 24 vollständig zu entfernen, beispielsweise wenn diese durch Verschleiß sehr stark abgenutzt sind oder weil der Abstand x zwischen benachbarten Schneidkörperschneiden 43 oder die Dichte der Schneidkörperschneiden 43 zu groß ist. Diese Vorgehensweise ist schematisch in den Figuren 9a und 9b veranschaulicht. Die in Figur 9b gepunktet dargestellten Schneidkörper 24 wurden entfernt. Die mit Pfeilen markierten Schneidkörper 24 wurden bearbeitet, beispielsweise um deren Kontaktfläche KF zu verringern. Auch die ersten Schneidkörper 24a können sowohl bearbeitet als auch entfernt werden.

Die Bearbeitung der ersten Schneidkörper 24 und der zweiten Schneidkörper 24b findet in einem sechsten Verfahrensschritt S6 statt. Diese Bearbeitung bzw. Entfernung der ersten und zweiten Schneidkörper 24a, 24b wird dann durchgeführt, wenn entweder die Isthüllfläche HF außerhalb des Sollhüllraumes HR liegt oder wenn die Abweichung D zwischen einer der vorgegebenen Sollgrößen GS und der zugeordneten Istgröße GI außerhalb des Toleranzbereichs TB liegt (Verzweigung POS aus dem fünften Verfahrensschritt S5). Im Anschluss an die Bearbeitung im sechsten Verfahrensschritt S6 wird das Verfahren wieder mit dem dritten und vierten Verfahrensschritten S3, S4 fortgesetzt und die Isthüllfläche bzw. die wenigstens eine Istgröße GI ermittelt. Dies ist deswegen notwendig, weil bei der Laserbearbeitung der Arbeitsfläche 23 nicht exakt vorhergesehen werden kann, welche Auswirkung das Richten eines Laserstrahlimpulses L auf die Arbeitsfläche 23 hat. Diese Vorhersage ist deswegen schwierig, weil beispielsweise die Absorptionseigenschaften eines Schneidskörpers 24 völlig verschieden sind von den Absorptionseigenschaften des Bindungsmaterials 25. Da unmittelbar unter der Oberfläche des Bindungsmaterials ein weiterer Schneidkörper 24 in einer inneren Lage angeordnet sein kann (vergleiche zum Beispiel Figur 5), kann beispielsweise beim Richten des Laserstrahls auf das Bindungsmaterial 25 zwischen Schneidkörpern 24 nicht exakt vorhergesagt werden, wie tief der erzeugte Kater ist und ob durch das Entfernen des Bindungsmaterials 25 ein Schneidkörper 24 herausgelöst und entfernt werden könnte.

Die Verfahrensschritte S3 bis S6 werden solange wiederholt, bis die Abweichung D für alle vorgegebenen Sollgrößen GS und alle jeweils zugeordneten Istgrößen GI kleiner ist als der jeweils zugeordnete Toleranzbereich TB und wenn außerdem die Isthüllfläche HF innerhalb des Sollhüllraums HR liegt. Dann wird das Verfahren bei END beendet (Verzweigung NEG aus dem fünften Verfahrensschritt S5).

Im sechsten Verfahrensschritt S6 kann der Laserstrahlimpuls L nicht nur direkt auf einen zu bearbeitenden bzw. zu entfernenden ersten Schneidkörper 24a oder zweiten Schneidkörper 24b gerichtet werden. Beispielsweise ist es auch möglich, zur Beeinflussung der Höhe H oder auch zum Entfernen eines Schneidkörpers 24a, 24b den Laserstrahlimpuls L auf das Bindungsmaterial 25 zwischen den Schneidkörpern zu richten. Neben dem Bearbeiten und/oder Entfernen von Schneidkörpern können auch Vertiefungen 50 die Arbeitsfläche 23 eingebracht werden. Solche Vertiefungen 50 können den Abfluss von Kühlmittel und den Abtransport von Spänen im Bereich der Arbeitsfläche 23 verbessern. Die Querschnittskontur solcher Vertiefungen 50 kann beliebig gewählt werden. Es ist beispielsweise möglich ,rinnenförmige Vertiefungen 50 in die Arbeitsfläche 23 einzubringen, wie dies beispielhaft schematisch in Figur 11 veranschaulicht ist. Hierfür kann die durch die Lasereinrichtung 35 gebildete Bearbeitungseinrichtung 34 verwendet werden. Solche Vertiefungen 50 können die Arbeitsfläche 23 vollständig durchsetzende Nuten bilden und quer, also rechtwinkelig oder schräg zur Drehrichtung um die Rotationsachse R verlaufen.

Die Erfindung betrifft eine Vorrichtung 20 und ein Verfahren 22 zur Bearbeitung einer eine Vielzahl von Schneidkörpern 24 aufweisenden Arbeitsfläche 23 eines Rotationswerkzeugs 21. Das Rotationswerkzeug 21 ist um eine Rotationsachse R antreibbar. Die Schneidkörper 24 können eine geometrisch definierte oder eine geometrisch undefinierte Werkzeugschneide bilden. Sie können an der Arbeitsfläche 23 statistisch verteilt angeordnet sein oder in definierten geometrischen Positionen angeordnet sein. Über eine optische Messanordnung 29 wird die Isthüllfläche HF der Arbeitsfläche 23 ermittelt. Zusätzlich kann wenigstens eine weitere Sollgröße GS erfasst werden, die einen mikroskopischen Parameter der Arbeitsfläche 23 beschreibt. Über die Messanordnung 29 wird zu jeder vorgegebenen Sollgröße GS die zugehörige Istgröße GI erfasst und die Abweichung zwischen Sollgröße GS und Istgröße GI bestimmt. Liegt die Isthüllfläche HF außerhalb eines vorgegebenen Sollhüllraumes HR oder ist eine Abweichung D zwischen einer Istgröße GI und der zugehörigen Sollgröße GS unzulässig groß, werden über eine Lasereinrichtung 35 ausgewählte erste und/oder zweite Schneidkörper 24a, 24b bearbeitet und/oder entfernt. Dieses Verfahren wird zyklisch solange durchgeführt, bis das Rotationswerkzeug 21 alle Vorgaben erfüllt.

### Bezugszeichenliste:

- 20: Vorrichtung
- 21: Rotationswerkzeug
- 22: Verfahren
- 23: Arbeitsfläche
- 24: Schneidkörper
- 25: Bindungsmaterial

- 29: Messanordnung
- 30: Durchlichtmessgerät
- 31: Durchlichtkamera
- 32: Auflichtmessgerät
- 33: Steuereinrichtung
- 34: Bearbeitungseinrichtung
- 35: Lasereinrichtung
- 36: Bearbeitungsstelle
- 37: Messstelle
- 38: Antriebseinrichtung

- 43: Schneidkörperschneide

- 50: Vertiefung

- E: Einhüllende
- END: Ende des Verfahrens
- ER: Radialebene
- GI: Istgröße
- GS: Sollgröße
- GS1: erste Sollgröße
- GS2: zweite Sollgröße
- GS3: dritte Sollgröße
- GS4: vierte Sollgröße
- GS5: fünfte Sollgröße
- GS6: sechste Sollgröße
- GF: Gesamtkontaktfläche
- H: Höhe
- HA: äußere Sollhüllfläche
- HF: Isthüllfläche
- HI: innere Sollhüllfläche
- HR: Sollhüllraum
- KF: Kontaktfläche
- KF1: erster Wert für die Kontaktfläche
- KF2: zweiter Wert für die Kontaktfläche
- KF3: dritter Wert für die Kontaktfläche
- L: Laserstrahl
- O1: optische Achse der Lasereinrichtung
- O2: optische Achse des Auflichtmessgeräts
- O3: optische Achse des Durchlichtmessgeräts
- R: Rotationsachse
- rad: Radius
- S1: erster Verfahrensschritt
- S2: zweiter Verfahrensschritt
- S3: dritter Verfahrensschritt
- S4: vierter Verfahrensschritt
- S5: fünfter Verfahrensschritt
- SRT: Start des Verfahrens
- T: Tiefe
- v: Länge
- w: Breite
- x: Minimalabstand
- y: Länge
- Z: Zentrum

## Patentansprüche

1. Verfahren zur Bearbeitung eines rotierend antreibbaren Rotationswerkzeugs (21) mit einer Mehrzahl von schneidkörpern (24), die wenigstens eine Werkzeugschneide oder einen Schneidenraum bilden, mit folgenden Schritten:
- Vorgeben eines Sollhüllraum (HR) für das Rotationswerkzeug (21) um die Rotationsachse (R) des Rotationswerkzeugs (21),
das Verfahren ist **gekennzeichnet durch**:
- Bestimmen von zu bearbeitenden und/oder zu entfernenden ersten Schneidkörpern (24a), deren Position oder Form außerhalb vorgegebener Toleranzen liegt,
- gezieltes Bearbeiten und/oder Entfernen der ersten Schneidkörper (24a).

2. Verfahren nach Anspruch 1 mit folgenden zusätzlichen Schritten:
- Vorgeben wenigstens einer weiteren eine Schneideigenschaft des Rotationswerkzeugs (21) beschreibenden Sollgröße (GS), die einen einzelnen Schneidkörper (24) und/oder eine Gruppe von Schneidkörper (24) charakterisiert,
- Bestimmen einer Istgröße (GI) zu jeder vorgegebenen Sollgröße (GS) eines einzelnen Schneidkörpers (24) und/oder eine Gruppe von Schneidkörper (24),
- Vergleichen der jeweiligen Istgröße (GI) mit der zugehörigen Sollgröße (GS) und Bestimmen einer Abweichung (D) zwischen Istgröße (GI) und Sollgröße (GS),
- Bestimmen von zu bearbeitenden und/oder zu entfernenden zweiten Schneidkörpern (24b), um die Abweichung (D) der Istgröße (GI) von der Sollgröße (GS) zu reduzieren, wenn diese außerhalb eines zulässigen Toleranzbereichs (TB) liegt,
- gezieltes Bearbeiten und/oder Entfernen der zweiten Schneidkörper (24b).

3. Verfahren nach Anspruch 1 oder 2,
**dadurch gekennzeichnet, dass** einzyklischer Prozessablauf eingerichtet ist, bei dem die beiden folgenden Prozessteile zyklisch wiederholt werden:
- Bestimmen, ob zu bearbeitende erste und/oder zweite Schneidkörper (24a, 24b) vorhanden sind und
- Bearbeiten und/oder Entfernen der ersten Schneidkörper (24a) und der zweiten Schneidkörper (24b).

4. Verfahren nach einem der vorhergehenden Ansprüche 2 oder 3,
**dadurch gekennzeichnet, dass** das Bearbeiten und/oder Entfernen der ersten Schneidkörper (24a) und der zweiten Schneidkörper (24b) mittels eines Laserstrahls (L; durchgeführt wird, der auf eine zu bearbeitende Stelle (36) der Arbeitsfläche (23) des Rotationswerkzeugs (21) gerichtet und/oder fokussiert ist.

5. Verfahren nach Anspruch 4,
**dadurch gekennzeichnet, dass** die optische Achse (01) des Laserstrahls (L) einen spitzen Winkel mit einer Radialebene (ER) einschließt, die durch die Rotationsachse (R) des Rotationswerkzeugs (21) und durch die zu bearbeitende Stelle (36) verläuft.

6. Verfahren nach einem der vorhergehenden Ansprüche, **dadurch gekennzeichnet, dass** als Sollgröße (GS) eine statistische Größe verwendet wird, die einer Gruppe von Schneidkörper (24) zugeordnet ist.

7. verfahren nach einem der vorhergehenden Ansprüche, **dadurch gekennzeichnet, dass** eine rotationssymmetrische Einhüllende (E) um die Rotationsachse (R) vorgegeben wird, mit einem durch eine Tiefe (T) beschriebenen variablen Abstand von der Rotationsachse (R) und dass zumindest eine der vorgegebenen Sollgrößen (GS) abhängig von der Tiefe (T) vorgegeben ist.

8. Verfahren nach einem der vorhergehenden Ansprüche, **dadurch gekennzeichnet, dass** als Sollgröße (GS2) die Größe einer Kontaktfläche (KF) eines Schneidkörpers (24) verwendet wird, die bei der Verwendung des Rotationswerkzeugs (21) mit einem bearbeiteten Werkstück in Kontakt gelangen kann.

9. Verfahren nach einem der vorhergehenden Ansprüche, **dadurch gekennzeichnet, dass** als Sollgröße (GS1) der Abstand (x) zwischen Schneiden (43) zweier benachbarter Schneidkörper (24) verwendet wird.

10. Verfahren nach einem der vorhergehenden Ansprüche, **dadurch gekennzeichnet, dass** als Sollgröße (GS4) die Anzahl (N) der Schneidkörper (24) oder die Anzahl (N) der Schneiden (43) der Schneidkörper (24) verwendet wird.

11. Verfahren nach einem der vorhergehenden Ansprüche, **dadurch gekennzeichnet, dass** als Sollgröße (GS3) die Länge (y) einer Schneide (43) eines Schneidkörpers (24) oder ein Längenwert der Schneiden (43) einer Gruppe von Schneidkörpern (24) verwendet wird.

12. Verfahren nach einem der vorhergehenden Ansprüche, **dadurch gekennzeichnet, dass** als Sollgröße (GS5) die Gesamtkontaktfläche (GF) einer Gruppe von Schneidkörpern (24) verwendet wird, wobei die Gesamtkontaktfläche (GF) die Summe der Kontaktflächen (KF) der Gruppe von Schneidkörpern (24) ist und die Kontaktfläche (KF) eines Schneidkörpers (24) die Fläche ist, die bei der Verwendung des Rotationswerkzeugs (21) mit einem bearbeiteten Werkstück in Kontakt gelangen kann.

13. Verfahren nach einem der vorhergehenden Ansprüche, **dadurch gekennzeichnet, dass** als Sollgröße (GS) ein geometrische Parameter eine Schneidkörpers (24) verwendet wird, der die Schneideigenschaften bestimmt.

14. Verfahren nach einem der vorhergehenden Ansprüche, **dadurch gekennzeichnet, dass** als Sollgröße (GS6) die Höhe (H) eines Schneidkörper (24) oder ein Höhenwert einer Gruppe von Schneidkörpern (24) verwendet wird, wobei die Höhe (H) von der den betreffenden Schneidkörper (24) umgebenden Außenfläche eines die Schneidkörper (24) haltenden Bindungsmaterials (25) des Rotationswerkzeugs (21) bis zur von der Rotationsachse (R) am weitesten entfernten Stelle des betreffenden Schneidkörpers (24) gemessen wird.

15. Verfahren nach einem der vorhergehenden Ansprüche, **dadurch gekennzeichnet, dass** in das die Schneidkörper (24) haltende Bindungsmaterial (25) des Rotationswerkzeugs (21) wenigstens eine Vertiefung (50) eingebracht wird.

16. Vorrichtung zur Bearbeitung eines rotierend antreibbaren Rotationswerkzeugs (21), das eine Mehrzahl von Schneidkörper (24) aufweist, die wenigstens eine Werkzeugschneide oder einen Schneidenraum bilden, mit einer Steuereinrichtung (33), die dazu eingerichtet ist, einen Sollhüllraums (HR) für das Rotationswerkzeug (21) um die Rotationsachse (R) des Rotationswerkzeugs (21) vorzugeben,
**gekennzeichnet durch**:
eine Messanordnung (29) zur Messung einer Isthüllfläche (HF) des Rotationswerkzeugs (21), wobei **durch** die Messanordnung (29) und/oder die Steuereinheit (33) zu bearbeitende und/oder zu entfernende erste Schneidkörper (24a) bestimmt werden, die den Sollhüllraum (HR) durchgreifen und aus dem Sollhüllraum (HR) herausragen, und eine Bearbeitungseinrichtung (34), die gezielt die ersten Schneidkörper (24a) bearbeiten und/ oder entfernen kann.

17. Vorrichtung nach Anspruch 16,
**dadurch gekennzeichnet,**
- **dass** die Steuereinrichtung (33) außerdem dazu eingerichtet ist, wenigstens einer weiteren die Schneideigenschaft des Rotationswerkzeugs (21) beschreibenden Sollgröße (GS) vorzugeben, die einen einzelnen Schneidkörper (24) und/oder eine Gruppe von Schneidkörpern (24) charakterisiert,
- dass die Messanordnung (29) außerdem dazu eingerichtet ist, zu jeder vorgegebenen Sollgröße (GS) jeweils eine zugeordnete Istgröße (GI) eines einzelnen Schneidkörper (24) und/oder eine Gruppe von Schneidkörpern (24) zu bestimmen, wobei die wenigstens eine gemessene Istgröße (GI) durch die Messanordnung (29) und/oder die Steuereinheit (33) mit der jeweils zugeordneten Sollgröße (GS) verglichen und eine Abweichung (D) zwischen Istgröße (GI) und Sollgröße (GS) bestimmt wird,
wobei durch die Messanordnung (29) und/oder die Steuereinheit (33) zu bearbeitende zweite Schneidkörper (24) bestimmt werden, um die Abweichung (D) der Istgröße (GI) von der Sollgröße (GS) zu reduzieren, wenn diese außerhalb eines zulässigen Toleranzbereichs (TB) liegt,
und **dass** die Bearbeitungseinrichtung (34) gezielt die zweiten Schneidkörpers (24b) bearbeitet und/oder entfernt.

18. Vorrichtung nach Anspruch 16 oder 17,
**dadurch gekennzeichnet, dass** die Bearbeitungseinrichtung (34) als Lasereinrichtung (35) ausgeführt ist, die einen Laserstrahl (L) erzeugt, um gezielt die ersten Schneidkörper (24a) und zweiten Schneidkörper (24b) zu bearbeiten und/oder zu entfernen.

19. Vorrichtung nach einem der Ansprüche 16 bis 18,
**dadurch gekennzeichnet, dass** die Messanordnung (29) ein optisches Messgerät (30, 32) aufweist, insbesondere ein Auflichtmessgerät (32) und/oder ein Durchlichtmessgerät (30).

## Claims

1. Method for machining a rotary tool (21) which can be driven in rotation, with a plurality of cutting bodies (24) which form at least one tool cutter or cutter space, with the following steps:
- definition of a nominal swept envelope (HR) for the rotary tool (21) about the rotation axis (R) of the rotary tool (21),
the method being **characterised by**:
- determination of first cutting bodies (24a) to be machined and/or removed, the position or shape of which lies outside predefined tolerances,
- targeted machining and/or removal of the first cutting bodies (24a).

2. Method according to claim 1 with the following additional steps:
- definition of at least one nominal variable (GS) describing a cutting property of the rotary tool (21) and characterising a single cutting body (24) and/or a group of cutting bodies (24),
- determination of an actual variable (GI) for each predefined nominal variable (GS) of a single cutting body (24) and/or a group of cutting bodies (24),
- comparison of the respective actual variable (GI) with the associated nominal variable (GS), and determination of a deviation (D) between the actual variable (GI) and the nominal variable (GS),
- determination of second cutting bodies (24b) to be machined and/or removed in order to reduce the deviation (D) of the actual variable (GI) from the nominal variable (GS) if this lies outside the permitted tolerance range (TB),
- targeted machining and/or removal of the second cutting bodies (24b).

3. Method according to claim 1 or 2, **characterised in that** a cyclic process sequence is established in which the two following process parts are repeated cyclically:
- determination of whether first and/or second cutting bodies (24a, 24b) to be machined are present, and
- machining and/or removal of the first cutting bodies (24a) and the second cutting bodies (24b).

4. Method according to one of the preceding claims 2 or 3, **characterised in that** the machining and/or removal of the first cutting bodies (24a) and the second cutting bodies (24b) takes place by means of a laser beam (L) which is directed and/or focused at a point (26) to be machined on the working surface (23) of the rotary tool (21).

5. Method according to claim 4, **characterised in that** the optical axis (O1) of the laser beam (L) encloses an acute angle with a radial plane (ER) which runs through the rotation axis (R) of the rotary tool (21) and through the point (36) to be machined.

6. Method according to any of the preceding claims, **characterised in that** as a nominal variable (GS), a statistical value is used which is assigned to a group of cutting bodies (24).

7. Method according to any of the preceding claims, **characterised in that** a rotationally symmetrical envelope (E) is predefined around the rotation axis (R), with a variable distance from the rotation axis (R) described by a depth (T), and that at least one of the predefined nominal variables (GS) is predefined depending on the depth (T).

8. Method according to any of the preceding claims, **characterised in that** as a nominal variable (GS2), the size of a contact area (KF) of a cutting body (24) which may come into contact with a machined workpiece on use of the rotary tool (21) is used.

9. Method according to any of the preceding claims, **characterised in that** as a nominal variable (GS1), the distance (x) between cutters (43) of two adjacent cutting bodies (24) is used.

10. Method according to any of the preceding claims, **characterised in that** as a nominal variable (GS4), the number (N) of cutting bodies (24) or the number (N) of cutters (43) of the cutting bodies (24) is used.

11. Method according to any of the preceding claims, **characterised in that** as a nominal variable (GS3), the length (y) of a cutter (43) of a cutting body (24), or a length value of the cutters (43) of a group of cutting bodies (24), is used.

12. Method according to any of the preceding claims, **characterised in that** as a nominal variable (GS5), the total contact area (GF) of a group of cutting bodies (24) is used, wherein the total contact area (GF) is the sum of the contact areas (KF) of the group of cutting bodies (24), and the contact area (KF) of one cutting body (24) is the area which may come into contact with a machined workpiece on use of the rotary tool (21).

13. Method according to any of the preceding claims, **characterised in that** as a nominal variable (GS), a geometric parameter of a cutting body (24) which determines the cutting properties is used.

14. Method according to any of the preceding claims, **characterised in that** as a nominal variable (GS6), the height (H) of a cutting body (24) or a height value of the group of cutting bodies (24) is used, wherein the height (H) of the outer face surrounding the respective cutting bodies (24) of a bonding material (25) holding the cutting bodies (24) of the rotary tool (21) is measured up to the point of the respective cutting body (24) which is furthest away from the rotation axis (R).

15. Method according to any of the preceding claims, **characterised in that** at least one depression (50) is made in the bonding material (25) holding the cutting bodies (24) of the rotary tool (21).

16. Device for machining a rotary tool (21) which can be driven in rotation and comprises a plurality of cutting bodies (24) which form at least one tool cutter or cutting space, with a control device (33) which is configured to define a nominal swept envelope (HR) for the rotary tool (21) around the rotation axis (R) of the rotary tool (21), **characterised by**:
a measuring arrangement (29) for measuring an actual enveloping surface (HF) of the rotary tool (21), wherein the measuring arrangement (29) and/or the control unit (33) determine first cutting bodies (24a) to be machined and/or removed which extend through the nominal swept envelope (HR) and protrude out of the nominal swept envelope (HR),
and a machining device which can machine and/or remove the first cutting bodies (24a) in a targeted fashion.

17. Device according to claim 16, **characterised in that**
- the control device (33) is also configured to predefine at least one further nominal variable (GS) describing the cutting property of the rotary tool (21) and characterising a single cutting body and/or a group of cutting bodies (24),
- the measuring device (29) is also configured to determine, for each predefined nominal variable (GS), an assigned actual variable (GI) of a single cutting body (24) and/or a group of cutting bodies (24), wherein the measuring arrangement (29) and/or the control unit (33) compares the at least one measured actual variable (GI) with the respective assigned nominal variable (GS), and a deviation (D) between the actual variable (GI) and the nominal variable (GS) is determined,
- wherein the measuring arrangement (29) and/or the control unit (33) determine second cutting bodies (24b) to be machined and/or removed in order to reduce the deviation (D) of the actual variable (GI) from the nominal variable (GS) if this lies outside a permitted tolerance range (TB),
- and the machining device (34) machines and/or removes the second cutting bodies (24b) in a targeted fashion.

18. Device according to claim 16 or 17, **characterised in that** the machining device (34) is configured as a laser device (35) which generates a laser beam (L) in order to machine and/or remove the first cutting bodies (24a) and second cutting bodies (24b) in a targeted fashion.

19. Device according to any of claims 16 to 18, **characterised in that** the measuring arrangement (29) comprises an optical measuring device (30, 32), in particular a reflected light measuring device (32) and/or a transmitted light measuring device (30).

## Revendications

1. Procédé d'usinage d'un outil rotatif (21) pouvant être entraîné en rotation, comportant une pluralité de corps de coupe (24) qui forment au moins un taillant d'outil ou un espace de taillant, comprenant les étapes suivantes :
- prédéfinition d'un espace enveloppant de consigne (HR) pour l'outil rotatif (21) autour de l'axe de rotation (R) de l'outil rotatif (21),
le procédé est **caractérisé par** :
- la détermination de premiers corps de coupe (24a) à usiner ou à retirer, dont la position ou la forme se situe en dehors de tolérances prédéfinies,
- l'usinage et/ou le retrait ciblé des premiers corps de coupe (24a).

2. Procédé selon la revendication 1, comprenant les étapes supplémentaires suivantes :
- prédéfinition d'au moins une autre grandeur de consigne (GS) décrivant une propriété de coupe de l'outil rotatif (21), qui caractérise un corps de coupe (24a) individuel et/ou un groupe de corps de coupe (24),
- détermination d'une grandeur réelle (GI) pour chaque grandeur de consigne (GS) prédéfinie d'un corps de coupe (24) individuel et/ou d'un groupe de corps de coupe (24),
- comparaison de la grandeur réelle (GI) respective avec la grandeur de consigne (GS) associée et détermination d'un écart (D) entre la grandeur réelle (GI) et la grandeur de consigne (GS),
- détermination de deuxièmes corps de coupe (24b) à usiner et/ou à retirer pour réduire l'écart (D) de la grandeur réelle (GI) par rapport à la grandeur de consigne (GS), lorsque celui-ci se situe en dehors d'une plage de tolérances (TB) admissible ;
- usinage ciblé et/ou retrait des deuxièmes corps de coupe (24b).

3. Procédé selon la revendication 1 ou 2, **caractérisé en ce qu'**il est prévu un déroulement de processus cyclique, selon lequel les deux parties de processus suivantes sont répétées de façon cyclique :
- détermination pour savoir s'il existe des premiers et/ou des deuxièmes corps de coupe (24a, 24b) devant être usinés, et
- usinage et/ou retrait des premiers corps de coupe (24a) et des deuxièmes corps de coupe (24b).

4. Procédé selon l'une des revendications précédentes 2 ou 3, **caractérisé en ce que** l'usinage et/ou le retrait des premiers corps de coupe (24a) et des deuxièmes corps de coupe (24b) est réalisé au moyen d'un faisceau laser (L) qui est dirigé et/ou focalisé sur un emplacement à usiner (36) de la surface active (23) de l'outil rotatif (21).

5. Procédé selon la revendication 4, **caractérisé en ce que** l'axe optique (01) du faisceau laser (L) forme un angle aigu avec un plan radial (ER) qui passe par l'axe de rotation (R) de l'outil rotatif (21) et par l'emplacement à usiner (36).

6. Procédé selon l'une des revendications précédentes, **caractérisé en ce que** l'on utilise comme grandeur de consigne (GS) une grandeur statistique qui est associée à un groupe de corps de coupe (24).

7. Procédé selon l'une des revendications précédentes, **caractérisé en ce que** l'on prédéfinit une enveloppante (E) symétrique de révolution autour de l'axe de rotation (R), avec une distance variable, décrite par une profondeur (T), par rapport à l'axe de rotation (R), et **en ce qu'**au moins une des grandeurs de consigne (GS) prédéfinies est prédéfinie en fonction de la profondeur (T).

8. Procédé selon l'une des revendications précédentes, **caractérisé en ce que** l'on utilise comme grandeur de consigne (GS2) la dimension d'une surface de contact (KF) d'un corps de coupe (24), qui, lors de l'utilisation de l'outil rotatif (21), peut entrer en contact avec une pièce usinée.

9. Procédé selon l'une des revendications précédentes, **caractérisé en ce que** l'on utilise comme grandeur de consigne (GS1) la distance (x) entre des taillants (43) de deux corps de coupe (24a) voisins.

10. Procédé selon l'une des revendications précédentes, **caractérisé en ce que** l'on utilise comme grandeur de consigne (GS4) le nombre (N) des corps de coupe (24) ou le nombre (N) des taillants (43) des corps de coupe (24).

11. Procédé selon l'une des revendications précédentes, **caractérisé en ce que** l'on utilise comme grandeur de consigne (GS3) la longueur (y) d'un taillant (43) d'un corps de coupe (24) ou une valeur de longueur des taillants (43) d'un groupe de corps de coupe (24).

12. Procédé selon l'une des revendications précédentes, **caractérisé en ce que** l'on utilise comme grandeur de consigne (GS5) la surface de contact totale (GF) d'un groupe de corps de coupe (24), la surface de contact totale (GF) étant la somme des surfaces de contact (KF) du groupe de corps de coupe (24), et la surface de contact (KF) d'un corps de coupe (24) étant la surface qui, lors de l'utilisation de l'outil rotatif (21), peut entrer en contact avec une pièce usinée.

13. Procédé selon l'une des revendications précédentes, **caractérisé en ce que** l'on utilise comme grandeur de consigne (GS) un paramètre géométrique d'un corps de coupe (24) qui détermine les propriétés de coupe.

14. Procédé selon l'une des revendications précédentes, **caractérisé en ce que** l'on utilise comme grandeur de consigne (GS6) la hauteur (H) d'un corps de coupe (24) ou une valeur de hauteur d'un groupe de corps de coupe (24), la hauteur (H) étant mesurée à partir de la surface extérieure, entourant le corps de coupe (24) concerné, d'un matériau de liaison (25), tenant les corps de coupe (24), de l'outil rotatif (21), jusqu'à l'emplacement du corps de coupe (24) concerné qui est le plus éloigné de l'axe de rotation (R).

15. Procédé selon l'une des revendications précédentes, **caractérisé en ce qu'**au moins un creux (50) est pratiqué dans le matériau de liaison (25), tenant les corps de coupe (24), de l'outil rotatif (21).

16. Dispositif d'usinage d'un outil rotatif (21) pouvant être entraîné en rotation, comportant une pluralité de corps de coupe (24) qui forment au moins un taillant d'outil ou un espace de taillant, comprenant un dispositif de commande (33) qui est conçu pour prédéfinir un espace enveloppant de consigne (HR) pour l'outil rotatif (21), autour de l'axe de rotation (R) de l'outil rotatif (21),
**caractérisé par**
un agencement de mesure (29) destiné à la mesure d'une surface enveloppante réelle (HF) de l'outil rotatif (21), l'agencement de mesure (29) et/ou l'unité de commande (33) déterminant des premiers corps de coupe (24a) à usiner et/ou à retirer, qui traversent l'espace enveloppant de consigne (HR) et dépassent de l'espace enveloppant de consigne (HR), et
un dispositif d'usinage (34) qui peut usiner ou retirer de façon précise les premiers corps de coupe (24a).

17. Dispositif selon la revendication 16, **caractérisé en ce que**
- le dispositif de commande (33) est en outre conçu pour prédéfinir au moins une autre grandeur de consigne (GS), décrivant la propriété de coupe de l'outil rotatif (21), qui caractérise un corps de coupe (24) individuel et/ou un groupe de corps de coupe (24),
- l'agencement de mesure (29) est en outre conçu pour déterminer pour chaque grandeur de consigne (GS) prédéfinie, respectivement une grandeur réelle (GI) associée d'un corps de coupe (24) individuel et/ou d'un groupe de corps de coupe (24), la grandeur réelle (GI) mesurée, au nombre d'au moins une, étant comparée par l'agencement de mesure (29) et/ou l'unité de commande (33) avec la grandeur de consigne (GS) associée respective, et un écart (D) entre la grandeur réelle (GI) et la grandeur de consigne (GS) étant déterminé,
des deuxièmes corps de coupe (24) à usiner étant déterminés par l'agencement de mesure (29) et/ou l'unité de commande (33), afin de réduire l'écart (D) de la grandeur réelle (GI) par rapport à la grandeur de consigne (GS), lorsque celui-ci se situe en dehors d'une plage de tolérances (TB) admissible,
et **en ce que** le dispositif d'usinage (34) usine de façon ciblée et/ou retire les deuxièmes corps de coupe (24b).

18. Dispositif selon la revendication 16 ou 17, **caractérisé en ce que** le dispositif d'usinage (34) est réalisé comme dispositif à laser (35) qui produit un faisceau laser (L) pour usiner de façon ciblée et/ou retirer les premiers corps de coupe (24a) et les deuxièmes corps de coupe (24b).

19. Dispositif selon l'une des revendications 16 à 18, **caractérisé en ce que** l'agencement de mesure (29) présente un appareil de mesure optique (30, 32), en particulier un appareil de mesure à lumière réfléchie (32) et/ou un appareil de mesure à lumière transmise (30).
